# EUROPEAN PATENT SPECIFICATION

(11) **EP 0 988 258 B1**
(45) Date of publication and mention of the grant of the patent: **26.05.2004**
(21) Application number: 98924496.7
(22) Date of filing: 01.06.1998
(51) Int. Cl.: C03C 13/00, C03B 37/02

(54) **METHOD OF PRODUCING WATER-SOLUBLE GLASS FIBRES**
VERFAHREN ZUM HERSTELLEN VON WASSERLÖSLICHEN GLASFASERN
PROCEDE DE PRODUCTION DE FIBRES DE VERRE SOLUBLES DANS L'EAU

(30) Priority: 31.05.1997 GB 9711178
(43) Date of publication of application: 29.03.2000
(73) Proprietor: GILTECH LIMITED, Ayr KA8 8AA (GB)
(72) Inventor: GILCHRIST, Thomas, Ayr KA7 2TW (GB); HEALY, David, Michael, By Alloway KA7 4EZ (GB)
(74) Representative: Ouzman, Beverley Nicola Claire
(86) International application number: PCT/GB1998/001597
(87) International publication number: WO 1998/054104

(56) References cited:
- EP-A- 0 578 023
- WO-A-86/04807
- WO-A-92/07801
- DATABASE WPI Section Ch, Week 08 Derwent Publications Ltd., London, GB; Class D22, AN 83-18194K XP002075169 & JP 58 004 821 A (MITSUBISHI MINING & CEMENT CO) , 12 January 1983
- DATABASE WPI Section Ch, Week 25 Derwent Publications Ltd., London, GB; Class L01, AN 73-80941U XP002075170 & JP 48 042 814 B (NIPPON SHEET GLASS CO LTD) , 1973

## Description

The present invention relates to a method for the production of water soluble silver ion-releasing glass fibres and glass wool.

It is known that certain glasses, in which the usual glass former, silicon dioxide, is replaced with phosphorous pentoxide, are soluble in water and body fluids. The rate of dissolution is controlled largely by the addition of glass modifiers such as calcium oxide. In simple terms, the greater the concentration of the modifier the slower the rate of dissolution. The rate of dissolution may range from minutes through to several years.

Soluble phosphate based glasses which have demonstrated good biocompatability can incorporate inorganic metals such that a sustained release of the metals can be provided at the wound site. Such materials can also find use in mechanical applications where, for example, slow release of an anti-corrosion agent may be beneficial.

Certain applications require that the glass is in the form of wool or fibres for mechanical applications such as insulation wool and packaging. Thus, for example, Mohr et al in "Fibre Glass" (Van Norstrand, Reinhold Company, New York 1978) and Jaray in "A New Method of Spinning Glass Fibres" (28th Annual SPI RP/C Institute proceedings 1973, Section 3-A) describe the production of wool and fibres, respectively, from molten glass. The glass fibres can be used for insulation, construction or even communication purposes. Glass wool also finds uses in packaging and insulation applications.

Normally, glass fibres are produced from molten glass using traditional fibre pulling techniques; whereby filaments of high temperature molten glass (850°-1300°C) are formed into strands and stretched over pull rolls before being collected onto a reel.

Glass wool formation is similar in that the glass is initially melted in a crucible. The crucible has suitable apertures to allow filaments of glass to flow downwards, which are then "blown" into wool using jets of either steam or compressed air. Alternatively, glass wool can be formed using a flame attenuation process, developed by Owens-Corning Fibreglass Corporation circa 1940. In this process molten glass passes through a bushing stage where primary filaments approximately 1 mm wide are formed. The fibres are then aligned into an exact uniformly juxtaposed array, using a fibre guide, into a jet flame issuing from an internal combustion burner. The jet flame causes thinning and lengthening of the fibres before they are collected on a steel mesh belt.

In both cases, the glass is either supplied in molten form direct from a crucible or from a temperature-gradient furnace.

Generally, water soluble glasses do not lend themselves to these traditional fibre and wool forming techniques. As an example, US Patent 4,604,097 of Graves et al discloses a water soluble drawn fibre, composed primarily of calcium oxide and phosphorous pentoxide. The fibre produced has a very low tensile strength, compared to fibres spun from non-soluble glass compositions.

Further, water soluble glasses can also be chemically aggressive when molten, unlike traditional glasses where silicon dioxide is used as the glass former. Additionally, the fibres produced are prone to thermal shock and can suffer from devitrification or crystallisation.

To combat problems of devitrification and crystallisation, water soluble glass fibres have been previously produced in exacting conditions. Thus, for example, Zimmer et al in WO92/07801 discloses drawing fibres from a water soluble glass composed primarily of phosphorus pentoxide, calcium oxide and iron oxide. In order to keep the viscosity of the glass suitable for drawing, the fibres were drawn at 1200°C. Also as a result of the chemically aggressive nature of the glass at that temperature the glass was pulled in an oxygen rich atmosphere (as high as 80% oxygen by volume). Obviously the commercial production of glass fibres under these high temperature controlled atmospheric conditions is expensive.

The problems of working with water soluble glass are compounded by the very nature of the glass. Metal oxides of elements such as lead and tellurium have previously been used in glass as additives to affect qualities of the glass; crystallisation temperature, viscosity and density, for example. As a result of environmental concerns and particularly when the glasses are to be used in a biological application these additives must be avoided and replaced by more acceptable alternatives.

Therefore, it is an object of the present invention to provide environmentally acceptable water soluble silver ion-releasing glass fibres with suitable mechanical properties, and to produce said fibres under less forcing conditions.

The present invention provides a method for forming a water-soluble silver ion-releasing glass fibre and/or glass wool, the method comprising producing a water-soluble silver ion-releasing glass and heating said glass above its melting point to form molten glass, cooling at least a portion of said molten glass to a pre-selected working temperature and then processing said molten glass having said working temperature into fibres and/or wool.

Generally, the glass is initially heated to a melting temperature of 500°-1200°C, preferably 750°-1050°C. The temperature is then slowly lowered to the working temperature at which fibre formation occurs.

Generally, the working temperature of the glass will be at least 200°C lower than the temperature at which the glass is initially heated. Suitable working temperatures may fall within the following ranges 400°-500°C, 500°-900°C (preferably 550°-700°C, more preferably 550°-650°C, especially 600°-650°C) and 800-2000°C. The working temperature selected will depend upon the glass composition, but an approximate indication of a suitable working temperature can be established as hereinafter described. Depending upon the glass composition used, the working temperature may be a range of suitable temperatures. The range of working temperatures may be narrow, for example of only 10°C, so that fibre formation may occur only between the temperature of N°C to (N+10)°C. Other glass compositions may have a wider temperature range for the working temperature in which glass formation is possible.

Alternatively, the working temperature of the glass may be defined as 50-300°C above the Tg of the glass.

In order to obtain an approximate indication of the working temperature for any particular glass composition, the glass composition should be slowly heated to its melting point. As soon as the glass is molten, frequent attempts to pull the composition upwardly to form a fibre should be made, with the temperature of the composition being very gradually increased between attempts. The temperature range of the composition during which fibre formation is possible should be noted and used as a preliminary working temperature in the process of the invention.

It will be clear to those skilled in the art that the pulling speed at which the fibre is drawn off can affect the choice of working temperature and the diameter of the fibre required. Where a fibre of relatively large diameter is required, the fibre tends to be pulled more slowly and the working temperature may need to be decreased slightly. Where a fibre of relatively small diameter is required (eg a glass wool), the fibres may be drawn at the much higher pulling speed and the working temperature may need to be increased (thus lowering the viscosity of the composition to accommodate the increased pulling speed). Selection of the exact working temperature in respect of any particular fibre size and composition will be a simple matter of routine evaluation of optimal process conditions.

With reference to the "working temperature" of the glass, the skilled person will appreciate that the furnace temperature may differ considerably from the temperature of the glass itself and indeed there may be a significant temperature gradient in the glass. Ideally the "working temperature" will be the temperature of the glass as fibre formation (ie. pulling) takes place. In many compositions however, it may not be practical to measure the temperature at the surface of the glass where pulling occurs by insertion of a temperature probe as the introduction of the probe may precipitate crystallisation of the glass. One alternative is to place a temperature probe into the bushing and to monitor the bushing temperature which will be a good indicator of the glass temperature at the moment of fibre formation. Alternatively an Infra Red pyrometer may be focused onto the appropriate area of the glass and used to monitor the temperature.

The glass to be formed into fibres will generally be heated until molten, optionally clarified, and then cooled slowly and controllably until the appropriate working temperature is reached and fibre formation can commence. The initial heating of the glass above its melting point and the subsequent fibre formation may be carried out in a single vessel or, alternatively, the molten glass may be transferred to a vessel designed specifically for fibre formation. One way of holding the molten glass in a vessel having a bushing within its lower surface until the temperature drops to the required working temperature is to coat or fill the holes of the bushing with a material that gradually melts over the period of time taken for the glass to reach the temperature required.

The most important aspect of the present invention is the manner in which the working temperature is reached. We have found that the molten glass, which may preferably be heated significantly above its melting point, should be allowed to cool in a highly controlled manner, the temperature being only gradually reduced until the working temperature is reached. A stirrer may be present to ensure that the temperature of the whole of the molten glass is kept as uniform as possible.

The glass is cooled to a temperature at which the glass will not crystallise for at least the period of time needed to convert the melt to fibre. This temperature is termed a "holding temperature". The rate of cooling from this holding temperature is determined by the rate at which the melt is consumed at the bushing and the difference in temperature between the bushing temperature (the working temperature) and the melt holding temperature.

Due to low viscosity and narrow temperature band for many of these compositions, control of the balance between melt temperature, bushing temperature and glass throughput rate is critical.

According to a further aspect of the present invention there is provided a composition suitable for processing into glass fibres and/or wool.

Phosphorous pentoxide (P₂O₅) is preferably used as the glass former.

Generally the mole percentage of phosphorous pentoxide in the glass composition is less than 85%, preferably less than 60% and especially between 30-60%.

Alkali metals, alkaline earth metals and lanthanoid oxides or carbonates are preferably used as glass modifiers.

Generally, the mole percentage of alkali metals, alkaline earth metals and lanthanoid oxides or carbonates is less than 60%, preferably between 40-60%.

Boron containing compounds (eg H₂O₃) are preferably used as glass additives.

Generally, the mole percentage of boron containing compounds is less than 15% or less, preferably less than 5%.

Other compounds may also be added to the glass to modify its properties, for example SiO₂, Al₂O₃, SO₃, sulphate ions (SO₄²⁻) or transition metal compounds (eg. first row transition metal compounds).

Typically the soluble glasses used in this invention comprise phosphorus pentoxide (P₂O₅) as the principal glass-former, together with any one or more glass-modifying non-toxic materials such as sodium oxide (Na₂O), potassium oxide (K₂O), magnesium oxide (MgO), zinc oxide (ZnO) and calcium oxide (CaO). The rate at which the glass dissolves in fluids is determined by the glass composition, generally by the ratio of glass-modifier to glass-former and by the relative proportions of the glass-modifiers in the glass. By suitable adjustment of the glass composition, the dissolution rates in water at 38°C ranging from substantially zero to 25mg/cm²/hour or more can be designed. However, the most desirable dissolution rate R of the glass is between 0.01 and 2.0mg/cm²/hour.

The water-soluble glass, which is preferably a phosphate glass, comprises a source of silver ions which may advantageously be introduced during manufacture as silver orthophosphate (Ag₃PO₄). The glass preferably enables controlled release of silver and other constituents in the glass and the content of these additives can vary in accordance with conditions of use and desired rates of release, the content of silver generally being up to 5 mole %. While we are following convention in describing the composition of the glass in terms of the mole % of oxides, of halides and of sulphate ions, this is not intended to imply that such chemical species are present in the glass nor that they are used for the batch for the preparation of the glass.

The optimum rate of release of silver ions into an aqueous environment may be selected by circumstances and particularly by the specific function of the released silver. The invention provides a means of delivering silver ions to an aqueous medium at a rate which will maintain a concentration of silver ions in said aqueous medium of not less than 0.01 parts per million and not greater than 10 parts per million. In some cases, the required rate of release may be such that all of the silver added to the system is released in a short period of hours or days and in other applications it may be that the total silver be released slowly at a substantially uniform rate over a period extending to months or even years. In particular cases there may be additional requirements, for example it may be desirable that no residue remains after the source of the silver ions is exhausted or, in other cases, where the silver is made available it will be desirable that any materials, other than the silver itself, which are simultaneously released should be physiologically harmless. In yet other cases, it may be necessary to ensure that the pH of the resulting solution does not fall outside defined limits.

Generally, the mole percentage of these additives in the glass is less than 25%, preferably less than 10%.

Embodiments of the invention will be described with reference to the following non-limiting examples.

### Example 1

| | Component | Mole % |
|---|---|---|
| Glass Composition | | |
| | Na₂O | 31.05 |
| | CaO | 16.00 |
| | Ag₂O | 3.88 |
| | P₂O₅ | 46.08 |
| | Na₂PO₃F | 0.97 |
| | 2Al₂O₃.B₂O₃ | 2.00 |

100 grams of the sample was heated to 900°C before being cooled and pulled at 650°C, at 25 km/hr. Overall the fibre was good; one sample was 10 km in length and 11 grams in weight, although there was some crystallisation at the pulling temperature.

### Example 2

| | Component | Mole % |
|---|---|---|
| Glass Composition | | |
| | Na₂O | 29.51 |
| | CaO | 15.21 |
| | Ag₂O | 3.68 |
| | P₂O₅ | 43.80 |
| | 2Al₂O₃.B₂O₃ | 1.90 |
| | Na₂PO₃F | 1.90 |
| | Na₂B₄O₇.10H₂O | 1.00 |
| | Na₂PO₄ | 3.00 |

74 grams of the sample was heated to 1000°C before being cooled and pulled at 635°C at 25 km/hr. The fibre produced was ultrafine; one sample was 18 km in length and 59 grams in weight. The sample was sprayed with WD40 to prevent water absorption and to aid lubricity. There was some debris at the bottom of the crucible, but this was found to be just iron deposits from the brushing rod.

### Example 3

| | Component | Mole % |
|---|---|---|
| Glass Composition | | |
| | Na₂O | 34.20 |
| | CaO | 16.15 |
| | P₂O₅ | 44.65 |
| | Na₂SO₄ | 5.00 |

200 grams of the sample was heated to 1050°C before being cooled and pulled at 635°C at 25 km/hr. The fibre was good although there was some crystallisation at the pulling temperature.

### Example 4

| | Component | Mole % |
|---|---|---|
| Glass Composition | | |
| | Na₂O | 32.40 |
| | CaO | 15.30 |
| | P₂O₅ | 42.30 |
| | 2Al₂O₃.B₂O₃ | 3.00 |
| | Na₂PO₃F | 1.00 |
| | Na₂SO₄ | 6.00 |

117 grams of the sample was heated to 950°C before being cooled and pulled at 635°C, at 40 km/hr. The fibre produced was good and there were no crystallisation problems even though the surface temperature of the fibre dropped to 510°C in the pulling process.

### Example 5

| | Component | Mole % |
|---|---|---|
| Glass Composition | | |
| | Na₂O | 31.71 |
| | CaO | 14.73 |
| | P₂O₅ | 36.33 |
| | B₂O₃ | 4.78 |
| | SO₃ | 9.40 |
| | Na₂PO₃F | 3.00 |

99 grams of the sample was heated to 800°C before being cooled to 650°C and pulled at 40 km/hr. The fibre produced was very fine but difficult to pull and quite fragile at speed.

### Example 6

| | Component | Mole % |
|---|---|---|
| Glass Composition | | |
| | Na₂O | 30.77 |
| | CaO | 14.28 |
| | P₂O₅ | 35.28 |
| | B₂O₃ | 4.64 |
| | SO₃ | 9.12 |
| | FePO₄ | 2.41 |
| | Wa₂PO₃F | 0.20 |
| | Na₂PO₃F | 0.20 |
| | MnHPO₄ | 2.06 |

200 grams of the sample was heated to 850°C before being cooled to 545°C and pulled at 40 km/hr. The fibre produced was strong and thin; there was not a problem of crystallisation, in fact the glass can be stored at 550°C for 72 hours without the onset of crystallisation.

### Example 7

Below is an example of a wool formulation and running conditions to illustrate the differences with the monofilament examples given above.

A typical wool formulation is

| | |
|---|---|
| Na₂O | 26.31 |
| CaO | 17.78 |
| P₂O₅ | 47.04 |
| B₂O₃ | 5.94 |
| MnO | 1.55 |
| Fe₂O₃ | 0.97 |
| NaF | 0.41 |

Solution rate, non annealed = 0.0278 mg.cm⁻²hr⁻¹
Melted and refined at 1000°C.
Cooled and held at 725°C.
Bushing temperature maintained at 365°C.

Thick fibres approx 1.2mm diameter drawn through pinch rollers at 2.5 M.mm⁻¹ from a bushing with 6 x 6.5mm diameter holes. Fibres jet attenuated to produce a fine wool 5 -15µm diameter. The wool was sprayed with silicone oil finish during the attenuation process and collected on a stainless steel mesh conveyor. Typically, attenuated wools will have diameters of 5 to 20µm. Monofilament fibres will mostly be 20 to 50µm diameter.

### Example 8

| | |
|---|---|
| Na₂O | 31.19 mole % |
| K₂O | 9.63 mole % |
| Ag₂O | 2.9 mole % |
| B₂O₃ | 2.74 mole % |
| 2NaF | 0.66 mole % |
| P₂O₅ | 52.88 mole % |

Furnace at 710°C - 800°C.
Bushing at 450°C - 460°C.
4.5mm bushing holes.
50km per hour pull rate.
Good fibres.
Solution rate = 1.68 not annealed 2.28 annealed.

### Example 9

| | |
|---|---|
| Na₂O | 32 mole % |
| K₂O | 10 mole % |
| Ag₂O | 3 mole % |
| P₂O₅ | 55 mole % |

Furnace at 850°C.
Bushing at 530°C.
5mm bushing holes.
55kmph.
Good strong fibres.

### Example 10

| | |
|---|---|
| Na₂O | 32 mole % |
| K₂O | 10 mole % |
| (MgO | 4 mole %) - added as an anti-microbial |
| B₂O₃ | 5 mole % |
| Ag₂O | 3 mole % |
| P₂O₅ | 46 mole % |

Furnace temperature 650°C - 730°C.
Bushing temperature 410°C - 420°C.
Bushing 5.5mm diameter.
Speed up to 100kmph.
Solution rate 0.7 annealed 1.0 non annealed (mg.cm⁻³.hr⁻¹). Very good strong reliable fibre. Very stable.

### Example 11

| | |
|---|---|
| Na₂O | 36.68 mole % |
| K₂O | 8.63 mole % |
| P₂O₅ | 45.09 mole % |
| H₂O₃ | 5.29 mole % |
| Ag₂O | 2.59 mole % |
| (CaO | 1.73 mole % to attenuate solution rate! |

Furnace temperature 550°C.
Bushing 62 x 5.0mm holes.
Bushing temperature 400°C.
Speed 80kmph.
Very good fibres.
Solution rate 3.11 annealed, 3.8 non annealed (mg.cm⁻².hr⁻¹).

The fibres show excellent tensile strength, flexibility and shock resistance.

The fibres are especially suitable for industrial and plastics reinforcement controlled release (anti-microbial, anti-corrosion etc) and rapidly biodegradable applications.

### Example 12

| | |
|---|---|
| CaO | 30 mole % |
| MgO | 20 mole % |
| P₂O₅ | 50 mole % |

Furnace at 1050°C.
Bushing 5.5mm holes.
Bushing temperature 700°C - 720°C.
Speed up to 80kmph.
Solution rate TBA.
Very strong fibre.

### Example 13

| | |
|---|---|
| (K₂O | 5 mole %) Trace to alter dissolution rate |
| CaO | 25 mole % |
| Mg₂O | 20 mole % |
| P₂O₅ | 50 mole % |

Furnace 1000°C.
Bushing 5.5mm.
Bushing temperature 560°C - 620°C.
Speed up to 70kmph.
Solution rate TBA.
Very strong fibre.
Anti-microbial.

### Example 14

| | |
|---|---|
| CaO | 28.5 mole % |
| MgO | 18.5 mole % |
| Ag₂O | 3 mole % |
| P₂O₅ | 50 mole % |

Furnace temperature 1050°C - 1150°C.
Bushing 4 x 5.5mm.
Bushing temperature 700°C.
Speed 50kmph.
Solution rate TBA.
Very good, strong fibre.
Anti-microbial.

### Example 15

| | |
|---|---|
| CaO | 30 mole % |
| MgO | 20 mole % |
| P₂O₅ | 50 mole % |

### As Example 14 (without silver)

The fibres show excellent tensile strength, flexibility and shock resistance. These fibres are suitable for applications requiring slower release and greater tensile strength plus biodegradability. The fibres are suitable for orthopaedic implants and tissue engineering applications.

## Claims

1. A method for forming water-soluble silver ion-releasing glass fibres, the method comprising providing a composition suitable for producing a water-soluble silver ion-releasing glass and heating said composition above the melting point of said glass to form a molten glass, cooling at least a portion of said molten glass to a pre-selected working temperature and then processing said molten glass having said working temperature into fibres.

2. A method as claimed in Claim 1 wherein said portion of said molten glass is cooled slowly to said working temperature.

3. A method as claimed in either one of Claims 1 and 2 wherein said working temperature is 50-300°C above the Tg of the glass.

4. A method as claimed in either one of Claims 1 and 2 wherein said working temperature is at least 200°C below the temperature to which the glass is initially heated.

5. A method as claimed in any one of Claims 1 to 4 wherein glass wool is formed.

6. A method as claimed in any one of Claims 1 to 5 wherein phosphorous pentoxide is used as the glass former.

7. A method as claimed in any one of Claims 1 to 6 wherein boron containing compounds are used as glass modifiers.

8. A method as claimed in Claim 7 wherein B₂O₃ is used as a glass modifier at a mole percentage of 15% or less.

9. A method as claimed in any of Claims 1 to 8 wherein silver orthophosphate is added during manufacture of the glass as a source of silver ions.

10. A method as claimed in any one of Claims 1 to 9 wherein the working temperature is 500 to 900°C.

11. A method as claimed in any one of Claims 1 to 10 wherein the composition is heated above the melting point of the glass to a temperature of 500 to 1200°C.

## Patentansprüche

1. Ein Verfahren zum Bilden von wasserlöslichen, Silberionen freisetzenden Glasfasern, wobei das Verfahren das Bereitstellen einer Zusammensetzung, die für das Herstellen eines wasserlöslichen, Silberionen freisetzenden Glases geeignet ist, und das Erhitzen der Zusammensetzung über den Schmelzpunkt des Glases, um ein geschmolzenes Glas zu bilden, das Abkühlen von mindestens einem Anteil des geschmolzenen Glases auf eine vorgewählte Arbeitstemperatur und das nachfolgende Bearbeiten des die Arbeitstemperatur aufweisenden geschmolzenen Glases in Fasern beinhaltet.

2. Verfahren gemäß Anspruch 1, wobei der Anteil des geschmolzenen Glases langsam auf die Arbeitstemperatur abgekühlt wird.

3. Verfahren gemäß einem der Ansprüche 1 oder 2, wobei die Arbeitstemperatur 50-300 °C über der Tg des Glases liegt.

4. Verfahren gemäß einem der Ansprüche 1 oder 2, wobei die Arbeitstemperatur mindestens 200 °C unter der Temperatur liegt, auf die das Glas anfangs erhitzt wird.

5. Verfahren gemäß einem der Ansprüche 1 bis 4, wobei Glaswolle gebildet wird.

6. Verfahren gemäß einem der Ansprüche 1 bis 5, wobei Phosphorpentoxid als der Glasbildner verwendet wird.

7. Verfahren gemäß einem der Ansprüche 1 bis 6, wobei Bor enthaltende Verbindungen als Glasmodifikationsmittel verwendet werden.

8. Verfahren gemäß Anspruch 7, wobei B₂O₃ als Glasmodifikationsmittel bei einem Mol-Prozentsatz von 15 % oder weniger verwendet wird.

9. Verfahren gemäß einem der Ansprüche 1 bis 8, wobei Silberorthophosphat während der Herstellung des Glases als Silberionenquelle zugegeben wird.

10. Verfahren gemäß einem der Ansprüche 1 bis 9, wobei die Arbeitstemperatur 500 bis 900 °C beträgt.

11. Verfahren gemäß einem der Ansprüche 1 bis 10, wobei die Zusammensetzung über den Schmelzpunkt des Glases auf eine Temperatur von 500 bis 1200 °C erhitzt wird.

## Revendications

1. Un procédé pour former des fibres de verre à libération d'ions argent solubles dans l'eau, le procédé comportant de fournir une composition convenant pour produire un verre à libération d'ions argent soluble dans l'eau et de chauffer ladite composition au-delà du point de fusion dudit verre pour former un verre fondu, de refroidir au moins une portion dudit verre fondu jusqu'à une température de travail présélectionnée et de transformer ensuite ledit verre fondu ayant ladite température de travail en fibres.

2. Un procédé tel que revendiqué dans la revendication 1 dans lequel ladite portion dudit verre fondu est refroidie lentement jusqu'à ladite température de travail.

3. Un procédé tel que revendiqué dans l'une ou l'autre des revendications 1 et 2 dans lequel ladite température de travail est de 50 à 300 °C au-dessus de la Tg du verre.

4. Un procédé tel que revendiqué dans l'une ou l'autre des revendications 1 et 2 dans lequel ladite température de travail est au moins de 200 °C au-dessous de la température à laquelle le verre est initialement chauffé.

5. Un procédé tel que revendiqué dans n'importe laquelle des revendications 1 à 4 dans laquelle de la laine de verre est formée.

6. Un procédé tel que revendiqué dans n'importe laquelle des revendications 1 à 5 dans lequel du pentoxyde de phosphore est utilisé en tant que vitrifiant.

7. Un procédé tel que revendiqué dans n'importe laquelle des revendications 1 à 6 dans lequel des composés contenant du bore sont utilisés en tant que modificateurs de verre.

8. Un procédé tel que revendiqué dans la revendication 7 dans lequel B₂O₃ est utilisé en tant que modificateur de verre à un pourcentage molaire de 15 % ou moins.

9. Un procédé tel que revendiqué dans n'importe laquelle des revendications 1 à 8 dans lequel de l'orthophosphate d'argent est ajouté au cours de la fabrication du verre en tant que source d'ions argent.

10. Un procédé tel que revendiqué dans n'importe laquelle des revendications 1 à 9 dans lequel la température de travail va de 500 à 900 °C.

11. Un procédé tel que revendiqué dans n'importe laquelle des revendications 1 à 10 dans lequel la composition est chauffée au-delà du point de fusion du verre jusqu'à une température allant de 500 à 1 200 °C.
